# EUROPÄISCHE PATENTSCHRIFT

(11) **EP 1 136 345 B1**
(45) Veröffentlichungstag und Bekanntmachung des Hinweises auf die Patenterteilung: **18.05.2005**
(21) Anmeldenummer: 01104492.2
(22) Anmeldetag: 01.03.2001
(51) Int. Cl.: B62D 25/14, B60H 1/00

(54) **Querträger in Hybridbauweise**
Support cross member of hybrid construction
Poutre transversale de support en construction hybride

(30) Priorität: 24.03.2000 DE 10014606
(43) Veröffentlichungstag der Anmeldung: 26.09.2001
(73) Patentinhaber: Behr GmbH & Co. KG, 70469 Stuttgart (DE)
(72) Erfinder: Neuss, Sabine, 71691 Freiberg (DE); Reddig, Thomas, 74321 Bietigheim-Bissingen (DE); Wolf, Walter, 71570 Oppenweiler-Zell (DE)

(56) Entgegenhaltungen:
- EP-A- 0 370 342
- DE-A- 4 232 847
- DE-U- 29 916 466
- DE-U- 29 916 467
- FR-A- 1 322 241
- FR-A- 2 697 475

## Beschreibung

Die Erfindung betrifft einen Querträger in Hybridbauweise, insbesondere zum Anordnen zwischen den A-Säulen eines Kraftfahrzeuges, der einen schalenförmigen Grundkörper aufweist, der mittels angespritzten Rippen aus Kunststoff ausgesteift ist und in welchem wenigstens ein Luftführungskanal vorgesehen ist.

Träger in Hybridbauweise, die auch für Fahrzeugteile eingesetzt werden können, sind grundsätzlich aus der EP-B 0 370 342 bekannt.

Ein Querträger der eingangs genannten Art ist beispielsweise aus der DE-U 299 16 466 bekannt. Bei dieser Bauart werden Luftführungskanäle als vorgefertigte, rohrförmige Gebilde nach der Herstellung des Querträgers unter die Kunststoffverrippung eingezogen.

Der Erfindung liegt die Aufgabe zugrunde, einen Querträger der eingangs genannten Art so auszubilden, dass er weitere Funktionen übernehmen kann.

Diese Aufgabe wird dadurch gelöst, dass der Grundkörper im mittleren Bereich wenigstens einseitig aufgeweitet und als ein Teil eines Gehäuses einer Heizungs- oder Klimaanlage gestaltet ist.

Aufgrund dieser Ausbildung ist es möglich, den Querträger auch als wesentliches Tragelement für eine Heizungs- und Klimaanlage einzusetzen.

In Ausgestaltung der Erfindung wird vorgesehen, dass die Luftführungskanäle in den Querträger einstückig mit den Rippen eingeformt sind und in den aufgeweiteten Bereich münden. Damit lässt sich eine weitere Vereinfachung erzielen, wobei dann auch die Luftführungskanäle als Aussteifungselemente dienen.

In weiterer Ausgestaltung der Erfindung ist der Grundkörper in dem aufgeweiteten Bereich mittels wenigstens eines eingesetzten Bauteils ausgesteift. Dieses Bauteil wird zweckmäßigerweise an dem Grundkörper fixiert, bevor dieser in die Spritzform eingelegt wird. Der zur Aussteifung des Grundkörpers eingespritzte Kunststoff kann dann dafür Sorge tragen, dieses eingesetzte Bauteil endgültig zu fixieren. Das eingesetzte Bauteil kann jedoch auch so fest an dem Grundkörper angebracht werden, beispielsweise an dem Grundkörper angeschweißt werden, dass eine Fixierung mittels des eingespritzten Kunststoffes nicht erforderlich ist. Für dieses Befestigen sind auch kalte Verfahren geeignet, wie Nieten, Verrasten o.dgl..

Vorteilhaft werden in dem aufgeweiteten Bereich Anschlüsse für Luftaustrittsdüsen an den Grundkörper angeformt. Diese Anschlüsse sind somit direkt mit einem Teil des Gehäuses der Heizungs- oder Klimaanlage verbunden, so dass keine internen Leitungen o.dgl. verlegt werden müssen.

In weiterer Ausgestaltung der Erfindung wird vorgesehen, dass an die Außenseite des Grundkörpers Aufnahmen und/oder Befestigungselemente für im Bereich einer Instrumententafel anzuordnende Bauteile angeformt sind. Damit wird der Querträger als Haupttragelement für die Instrumententafel ausgenutzt. Dabei ist es zweckmäßig, wenn in dem Bereich der Aufnahmen und/oder Befestigungselemente zusätzliche Versteifungselemente für den Grundkörper vorgesehen sind. Diese zusätzlichen Versteifungselemente können nachträglich angebrachte Profile oder sogenannte "tailored blanks" sein. Es ist auch möglich, beispielsweise vor dem Einlegen in das Spritzwerkzeug die Wandungen im Bereich der Aufnahmen und/oder Befestigungselemente durch Einlegebleche und/oder Umbug, Falz oder Sicken o.dgl. zu verstärken.

Weitere Merkmale und Vorteile der Erfindung ergeben sich aus den Unteransprüchen und der nachfolgenden Beschreibung der in den Zeichnungen dargestellten Ausführungsbeispiele.
- Fig. 1: zeigt eine Draufsicht auf einen erfindungsgemäßen Querträger in Hybridbauweise mit einem Teil von an ihm angebrachten Bauteilen,
- Fig. 2: einen Schnitt durch den Querträger entlang der Linie II-II der Fig. 1 in größerem Maßstab,
- Fig. 3: einen Schnitt durch die Ausführungsform nach Fig. 1 entlang der Linie III-III in nicht ganz so starker Vergrößerung,
- Fig. 4: einen Schnitt der Fig. 1 entlang der Linie IV,
- Fig. 5: einen Schnitt entlang der Linie V-V der Fig. 1,
- Fig. 6: einen Schnitt durch einen Endbereich einer abgewandelten Ausführungsform einer Querträgers und
- Fig. 7 bis 9: Querschnitte von weiteren Ausführungsbeispielen für Querträger in Hybridbauweise.

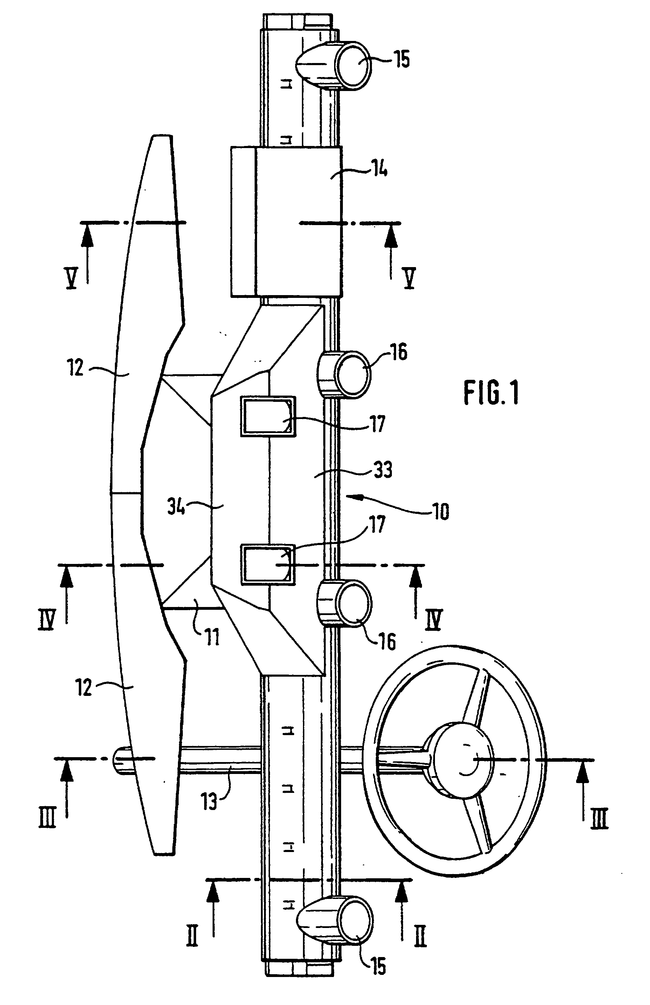

Der in Fig. 1 dargestellte Querträger 10 wird zwischen den A-Säulen eines Kraftfahrzeuges angeordnet und wird nicht nur als Tragkonstruktion ausgenutzt, sondern als Funktionsbauteil für weitere Einrichtungen, insbesondere für die Heizungsund/oder Klimaanlage des Kraftfahrzeuges. An dem Querträger 10 ist ein Gehäuse 11 der Heizungs- oder Klimaanlage angebracht, das nach vorne querverlaufende Strömungskanäle 12 für eine Defrosteinrichtung für eine Windschutzscheibe aufweist. Der Querträger 10 dient darüber hinaus zum Befestigen des Mantelschutzrohres 13 oder eines Lagerbocks oder Befestigungsbauteils einer Lenksäule auf der Fahrerseite sowie zum Anbringen eines Airbag 14 auf der Beifahrerseite. Darüber hinaus bildet der Querträger 10 zwei von dem mittleren Bereich ausgehende Luftkanäle, die zu Seitendüsen 15 führen. Von dem mittleren Bereich des Querträgers, der an das Gehäuse 11 anschließt, führen Mitteldüsen 16, sogenannte Mannanströmer, zum Fahrzeuginnenraum. Darüber hinaus gehen im Bereich des Gehäuses 11 von dem Querträger 10 nach oben gerichtete Kaltluftdüsen 17 aus, die dazu bestimmt sind, Kaltluft nach oben auszublasen, die dann entlang des Fahrzeugdaches in den hinteren Bereich des Fahrgastraumes strömt, d.h. zur hinteren Sitzreihe.

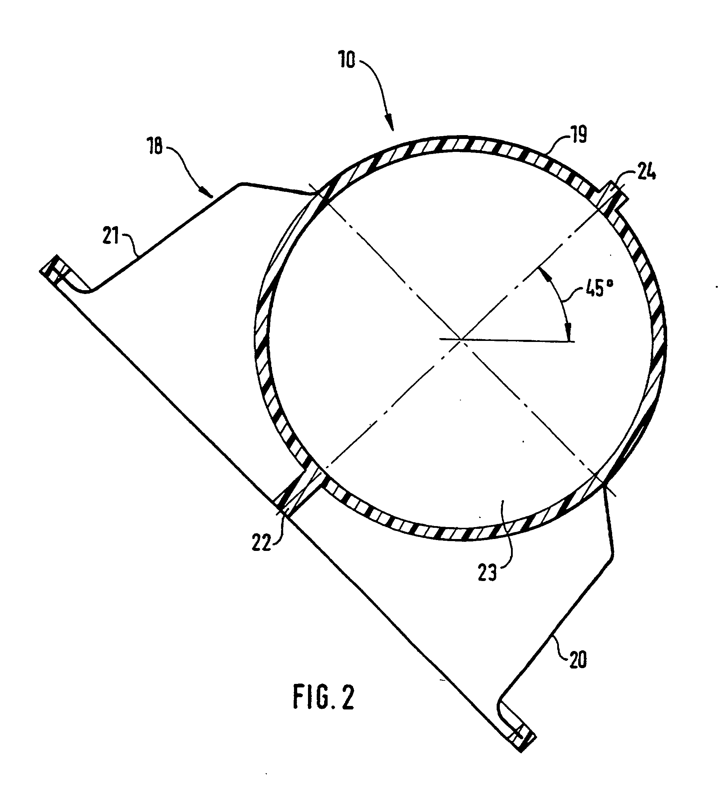

Die Grundform des Querträgers 10 in Hybridbauweise ist aus dem in Fig. 2 dargestellten Querschnitt zu erkennen. Er wird aus einem schalenförmigen Grundkörper 18 gebildet, der aus Metall, beispielsweise Aluminium oder Stahl oder auch aus Kunststoff hergestellt ist. Dieser Grundkörper 18 wird in ein Spritzwerkzeug eingelegt und dann mit einem Kunststoff verstärkt, der in das Spritzwerkzeug eingespritzt wird. Wenn ein Grundkörper 18 aus Kunststoff eingesetzt wird, so ist es aus Gründen des Recycling zweckmäßig, für das Spritzen den gleichen Kunststoff zu verwenden. Als Kunststoff kommt vorzugsweise Polypropylen oder Polyamid oder Polyurethan oder andere Thermoplaste in Frage, die gegebenenfalls mit Glasfasern oder Kohlefasern o.dgl. verstärkt sind. Der Grundkörper 18 besitzt eine halbzylindrische Grundschale 19, an deren Ränder Schenkel 20, 21 anschließen. Zur Aussteifung wird der Abstand zwischen den Schenkeln 20, 21 mittels Kunststoffmaterial überbrückt, das rauten-förmige Versteifungsrippen bildet, die sich etwa in der Mitte 22 kreuzen. Der Kunststoff umfasst die nach außen abgewinkelten Ränder der Schenkel 20, 21. Ebenso können quer verlaufende Stege oder Kombinationen unterschiedlicher Rippungen vorgesehen werden.

In das Spritzwerkzeug werden außer dem schalenförmigen Grundkörper 18 Kerne eingelegt, so dass rohrförmige Luftzuführkanäle 23 im Innern gespritzt werden. Bei diesem Ausführungsbeispiel werden die Luftführungskanäle 23 vollständig aus Kunststoffwandungen gebildet. Wie ferner aus Fig. 2 zu ersehen ist, sind die Schenkel 20, 21 des Grundkörpers 18 ausgehend von den Randern des halbzylindrischen Teils 19 nach außen abgewinkelt, so dass sich Kerne einer geeigneten Form einführen lassen, um die rauten-förmige Verrippung zu bilden.

Der schalenförmige Grundkörper 18 ist an mehreren Stellen mit Durchbrechungen versehen, so dass das Kunststoffmaterial sich formschlüssig mit dem schalenförmigen Grundkörper 18 verbindet. Bei dem Ausführungsbeispiel ist in der Mitte auf der Außenseite des schalenförmigen Grundkörpers 18 eine in Längsrichtung verlaufende Rippe 24 vorgesehen, die vorzugsweise in regelmäßigen Abständen durch Durchbrechungen hindurch mit dem innen angespritzten Kunststoff in Verbindung steht. Insbesondere werden, wie später noch erläutert werden wird, an einigen Stellen an der Außenseite des Querträgers 10 Befestigungselemente aus Kunststoff geschaffen. Wie ferner aus Fig. 2 zu ersehen ist, ist der Querträger 10 in Hybridbauweise so angeordnet, dass die Schenkel 20, 21 unter einem Winkel von vorzugsweise etwa 45° schräg nach vorne zu dem vorderen Ende eines Fahrzeuges gerichtet sind. Der Winkel richtet sich nach der Orientierung von Lenksäule, Airbag und Klimaanlage und kann deshalb auch andere Größen haben.

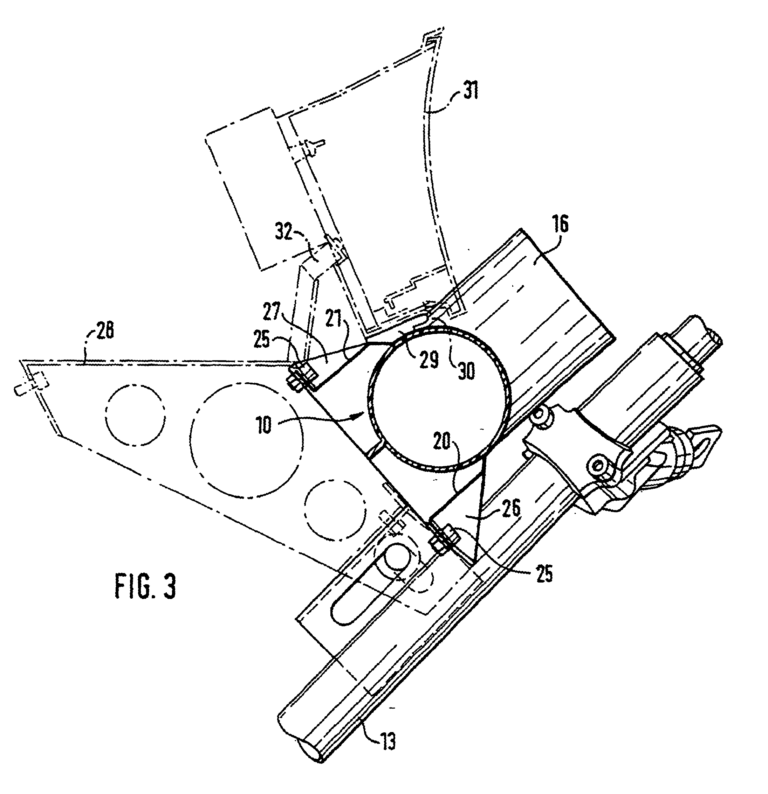

Im Bereich der Lenksäule, der in Fig. 3 näher dargestellt ist, sind die abgewinkelten Ränder der Schenkel 20, 21 des Querträgers 10 im Bereich von Befestigungsstellen verbreitert, so dass sie Löcher für Befestigungsschrauben 25 aufnehmen können. Im Bereich dieser Verbreiterungen sind außen an die Schenkel 20, 21 noch Stege 26, 27 aus Kunststoff angespritzt. Bei einer abgewandelten Ausführungsform sind die Stege 26, 27 als Sicken aus dem Grundkörper 18 geformt. An diesen verbreiterten, abgewinkelten Enden ist zur Aussteifung eine Platte 28, vorzugsweise aus Blech, angebracht, die zur Aussteifung dieses Bereiches dient. In diesem Bereich ist ferner dann der Querträger 10 mittels einer Brücke 28 mit der vorderen Stirnwand des Fahrzeuges verbunden. Diese Brücke ist als eine Blechkonstruktion in Form eines kastenförmigen Profils gestaltet. An diese Brücke und damit auch an dem Querträger 10 ist die Lenksäule 13 befestigt, die bei dem Ausführungsbeispiel in Längsrichtung und in Querrichtung verstellbar und fixierbar ist. In dem in Fig. 3 dargestellten Bereich ist ferner an den Querträger 10 außen ein Halteelement 29 aus Kunststoff angespritzt, das eine Rastnase für ein hakenförmiges Befestigungselement 30 eines Tachometers 31 oder eines Kombinationsinstrumentes bildet, das an dieser Stelle an den Querträger eingehängt wird. Eine zusätzliche Befestigung erfolgt mittels Schrauben an einem Halter 32 der ebenfalls an dem Querträger 10 befestigt wird und vorzugsweise in dem Bereich des verbreiterten, abgewinkelten Endes des Steges 21.

In Fig. 3 ist noch eine Luftaustrittsdüse 16, ein sogenannter Mannanströmer, zu sehen, die ebenfalls aus dem Kunststoff einteilig mitgespritzt wird.

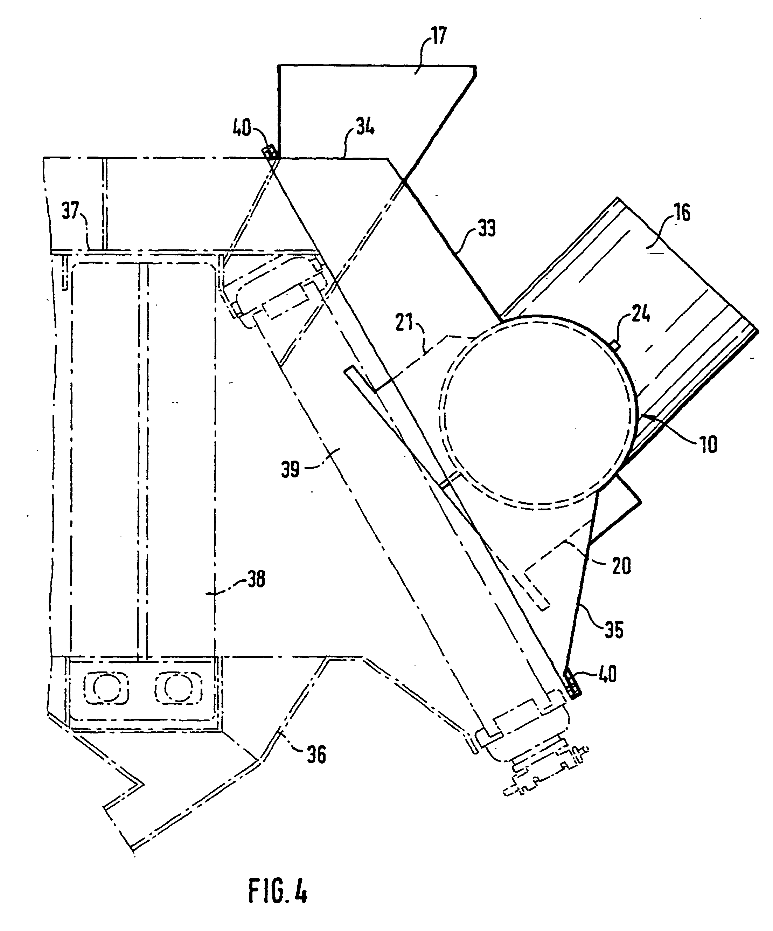

Wie aus Fig. 1 und insbesondere aus Fig. 4 zu ersehen ist, ist der Querträger 10 in seinem mittleren Bereich aufgeweitet, d.h. der Grundkörper 18 hat in diesem Bereich einen veränderten Querschnitt. Anstelle des Schenkels 21 erstreckt sich eine Wandung 33 schräg nach oben, die dann in einen etwa horizontalen Abschnitt 34 übergeht. Anstelle des Schenkels 20 ist eine schräg nach unten gerichtete Wandung 35 vorgesehen. Wie aus Fig. 1 zu ersehen ist, schließen an die Wandungen 33, 34, 35 Zwischenstücke an, die die seitlichen Enden des mittleren Bereiches wieder mit den Schenkeln 20, 21 des Querträgers 10 verbinden. Die Mitteldüsen 16 oder Mannanströmer sowie die oberen Kaltluftdüsen 17 schließen an diesen aufgeweiteten Bereich des Querträgers 10 an. Dieser aufgeweitete Bereich des Querträgers 10 ist mittels nicht näher dargestellter Einsätze ausgesteift. Insbesondere ist in der Mittelebene ein im Querschnitt dreieckförmiges Einsatzstück vorgesehen, das beispielsweise aus dem gleichen Material wie der Grundkörper 18 des Querträgers besteht und mit diesem durch Schweißen oder Kleben o.dgl. verbunden ist.

Der aufgeweitete Bereich des Querträgers 10 ist als ein Teil eines Gehäuses einer Heizungs- und Klimaanlage ausgeführt, wie dies aus Fig. 4 zu ersehen ist. Dieses mehrteilige Gehäuse 36, 37, das einen Verdampfer 38 und einen Heizkörper 39 enthält, ist dichtend an dem umlaufenden Rand 40 des aufgeweiteten Abschnittes des Querträgers 10 befestigt. Vorzugsweise ist eines der Gehäuseteile 36 oder 37 einstückig mit der Kunststoffverrippung des Querträgers 10 hergestellt.

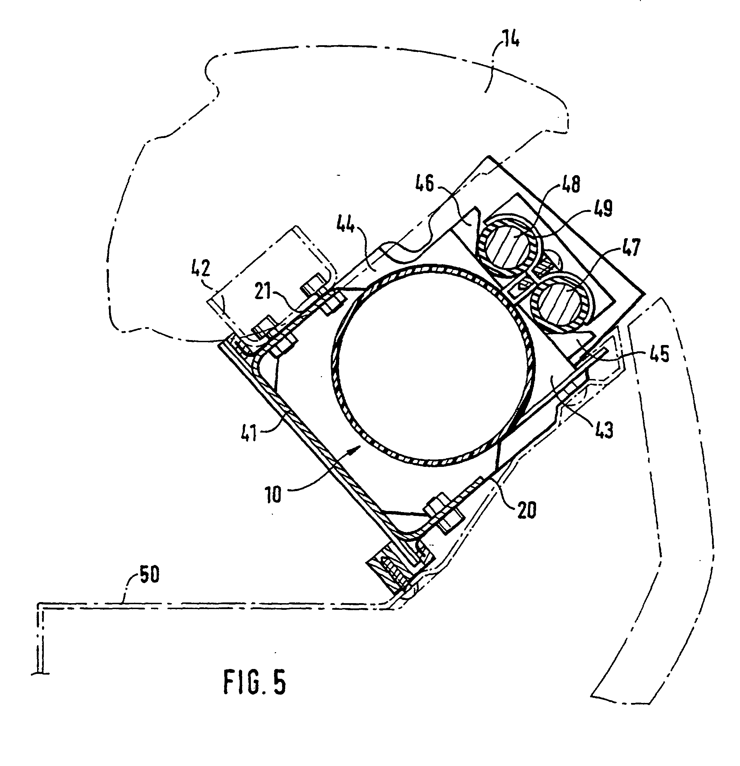

Wie aus Fig. 5 zu ersehen ist, ist der Querträger 10 im Beifahrerbereich zur Aufnahme eines Airbags 14 mittels eines Blecheinsatzes 41 ausgesteift. Dieser Blecheinsatz besitzt ein U-förmiges Teil, dessen Schenkel in die Aussparungen zwischen der Verrippung eingesteckt und mit den Schenkeln 20, 21 mittels Schrauben verbunden ist. An dem Schenkel 21 wird dabei gleichzeitig ein Halter 42 des Airbaggehäuses befestigt. Wie in Fig. 5 weiter zu ersehen ist, ist der Querträger in diesem Bereich durch außen angespritzte Kunststoff-Formteile 43, 44 ausgesteift. Diese Kunststoff-Formteile, die in regelmäßigen Abständen außen an dem Querträger vorgesehen sind, sind mit Nasen 45, 46 versehen, die eine Einlegerille für längs des Querträgers 10 verlaufende Kabel 47, 48 dienen, die mittels Schellen 49 befestigt sind.

Des weiteren sind an dem Querträger 10 im Bereich des Beifahrers Kunststoffhalterungen angeformt, an denen das Gehäuse 50 eines Handschuhkastens befestigt wird.

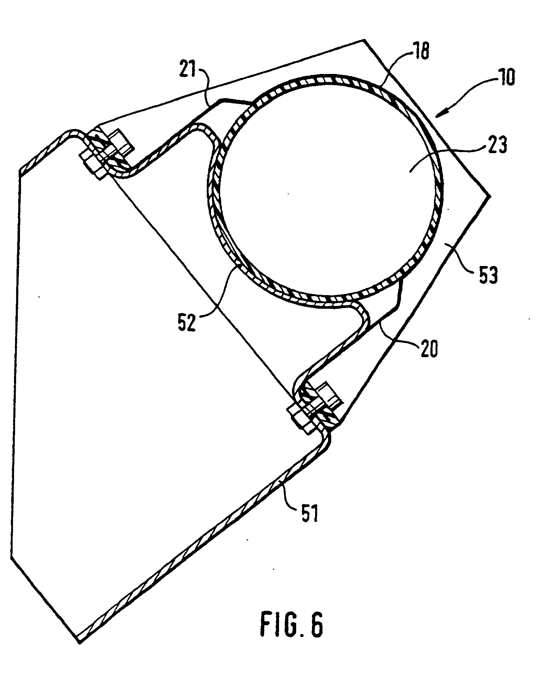

Die A-Säulen des Fahrzeuges sind mit Konsolen 51 versehen, an denen der Querträger 10 beispielsweise in der Weise befestigt wird, wie dies in Fig. 6 gezeigt ist. Auch in diesem Bereich sind die abgewinkelten und mit Kunststoff umspritzten Ränder der Schenkel 20, 21 verbreitert und mit Befestigungslöchern versehen, so dass sie flanschartig an der Konsole 51 mittels Schrauben verbunden werden können. Die Konsole ist mit einer Profilierung 52 versehen, die in die Aussparungen zwischen die Verrippung des Querträgers eindringt und an die Rundung des Luftführungskanals 23 angepasst ist.

Da in dem Bereich dieser Konsolen 51 der Querträger 10 sicher gehalten werden soll, wird er zusätzlich durch eine Außenverrippung 53 in diesem Bereich ausgesteift, die mit in dem Spritzwerkzeug hergestellt wird oder durch eine Formgebung des Grundkörpers 18.

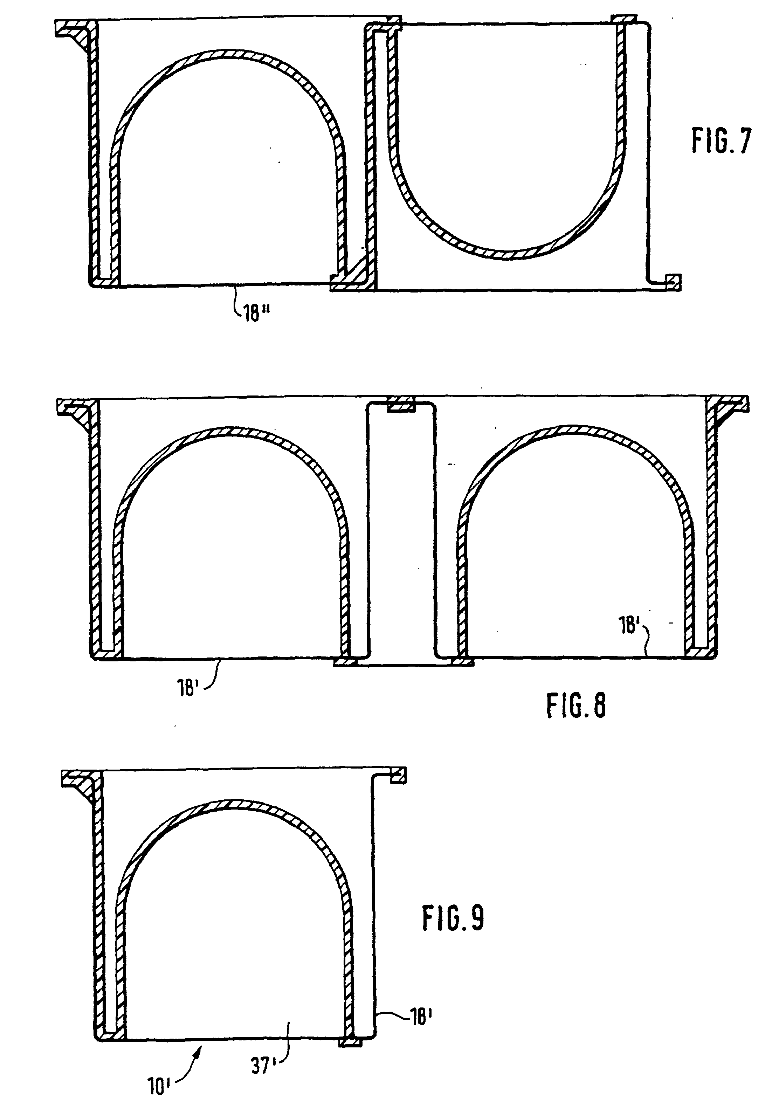

Für Querträger in Hybridbauweise, die eine als Teil eines Heizungs- oder Klimaanlagengehäuses bildende Aufweitung im mittleren Bereich zulassen, gibt es außer der in Fig. 1 bis 6 dargestellten Form weitere vorteilhafte Formen, beispielsweise die in Fig. 7 bis 9 dargestellte Form. Der Querträger 10' besitzt einen schalenförmigen Grundkörper 18' von U-förmigem Querschnitt, der zwischen den Schenkeln durch Einspritzen von Kunststoff in einem Spritzwerkzeug vorzugsweise in Rippenform ausgesteift ist. Dieser Kunststoff bildet mit dem Quersteg des U-förmigen Grundkörpers 18' einen einstückigen Luftkanal 37' wobei eine Wand von dem Grundprofil 18' gebildet wird. Die Darstellung nach Fig. 9 zeigt beidseits der strichpunktierten Linie Schnitte, die um eine Teilung der rautenförmigen Verrippung versetzt sind.

Der Querträger 10' kann in dem mittleren Bereich so aufgeweitet werden, wie dies beispielsweise in Fig. 7 und 8 dargestellt ist, indem er in diesem Bereich praktisch verdoppelt wird. Dabei ist bei dem Ausführungsbeispiel nach Fig. 7 der schalenförmige Grundkörper 18'' mäanderförmig profiliert, während bei dem Ausführungsbeispiel nach Fig. 8 zwei Grundkörper 18' des Ausführungsbeispiels nach Fig. 9 nebeneinander angeordnet sind.

## Patentansprüche

1. Querträger in Hybridbauweise, insbesondere zum Anordnen zwischen A-Säulen eines Kraftfahrzeuges, der einen schalenförmigen Grundkörper aufweist, der mittels angespritzter Rippen aus Kunststoff ausgesteift ist und in welchem wenigstens ein Luftführungskanal vorgesehen ist,
**dadurch gekennzeichnet, dass**
der Grundkörper (18) im mittleren Bereich wenigstens einseitig aufgeweitet und als Teil (33, 34, 35) eines Gehäuses einer Heizungs- und/oder Klimaanlage gestaltet ist.

2. Querträger nach Anspruch 1, **dadurch gekennzeichnet, dass** die Luftführungskanäle (37) in den Querträger (10) eingeformt sind und in den aufgeweiteten Bereich münden.

3. Querträger nach Anspruch 1 oder 2, **dadurch gekennzeichnet, dass** das eingespritzte Kunststoffmaterial einen allseitig aus Kunststoff hergestellten Luftzuführungskanal (37) bildet.

4. Querträger nach Anspruch 1 oder 2, **dadurch gekennzeichnet, dass** das Kunststoffmaterial nur einen Teil der Wandungen der Luftzuführungskanäle (37') bildet und dass die ergänzende oder ergänzenden Wandungen mittels des Grundkörpers (18', 18'') gebildet sind.

5. Querträger nach einem der Ansprüche 1 bis 4, **dadurch gekennzeichnet, dass** der Grundkörper (18) in dem aufgeweiteten Bereich mittels wenigstens eines eingesetzten Bauteils ausgesteift ist.

6. Querträger nach einem der Ansprüche 1 bis 5, **dadurch gekennzeichnet, dass** in dem aufgeweiteten Bereich Anschlüsse (16, 17) für Luftaustrittsdüsen an den Grundkörper (18) angeformt sind.

7. Querträger nach einem der Ansprüche 1 bis 6, **dadurch gekennzeichnet, dass** der Grundkörper (18) mit Aussparungen versehen ist, in deren Bereich rohrförmige Anschlussstutzen (15, 16) zu dem wenigstens einen Luftführungskanal (37) mittels des Kunststoffes angeformt sind.

8. Querträger nach einem der Ansprüche 1 bis 7, **dadurch gekennzeichnet, dass** an die Außenseite des Grundkörpers (18) Aufnahmen und/oder Befestigungselemente (29, 43, 44, 45, 46) für im Bereich einer Instrumententafel anzuordnende Bauteile (13, 14, 31, 47, 48) angeformt sind.

9. Querträger nach Anspruch 8, **dadurch gekennzeichnet, dass** in dem Bereich der Aufnahme und/oder Befestigungselemente zusätzliche Versteifungselemente (26, 27, 28, 41) für den Querträger vorgesehen sind.

10. Querträger nach einem der Ansprüche 1 bis 9, **dadurch gekennzeichnet, dass** der Grundkörper (18) einen im wesentlichen C-förmigen oder U-förmigen Querschnitt aufweist, dessen Schenkel (20, 21) schräg nach unten und vorne gerichtet sind.

11. Querträger nach Anspruch 10, **dadurch gekennzeichnet, dass** die Schenkel (20, 21) nach außen abgewinkelt und im Bereich von Befestigungsstellen verbreitert sind.

12. Querträger nach Anspruch 10 oder 11, **dadurch gekennzeichnet, dass** die Schenkel (20, 21) im Bereich von Befestigungsstellen auf der Außenseite mit Versteifungsrippen (26, 27, 53) versehen sind.

## Claims

1. Cross-member of hybrid construction, in particular for mounting between A-columns of a motor vehicle, which has a shell-shaped base body to which rigidity is imparted by injecting on ribs of plastic and in which at least one air duct is provided,
**characterised in that**
the base body (18) is wider on at least one side in the middle region and is designed as part (33, 34, 35) of a housing of a heating and/or air-conditioning system.

2. Cross-member as claimed in claim 1, **characterised in that** the air ducts (37) are integrally moulded in the cross-member (10) and open into the wider region.

3. Cross-member as claimed in claim 1 or 2, **characterised in that** the plastic material injected in forms an air duct (37) which is made from plastic on all sides.

4. Cross-member as claimed in claim 1 or 2, **characterised in that** the plastic material forms only a part of the walls of the air ducts (37') and the remaining or rest of the walls are formed by the base body (18', 18").

5. Cross-member as claimed in one of claims 1 to 4, **characterised in that** the base body (18) is stiffened in the wider region by means of at least one inserted component.

6. Cross-member as claimed in one of claims 1 to 5, **characterised in that** connectors (16, 17) for air outlet nozzles are integrally moulded on the base body (18) in the wider region.

7. Cross-member as claimed in one of claims 1 to 6, **characterised in that** the base body (18) is provided with recesses, in the region of which tubular connector pieces (15, 16) to the at least one air duct (37) are integrally moulded in the plastic.

8. Cross-member as claimed in one of claims 1 to 7, **characterised in that** mounts and/or fixing elements (29, 43, 44, 45, 46) are integrally moulded on the external face of the base body (18) for components (13, 14, 31, 47, 48) to be mounted in the region of a dashboard.

9. Cross-member as claimed in claim 8, **characterised in that** additional stiffening elements (26, 27, 28, 41) for the cross-member are provided in the region of the mount and/or fixing elements.

10. Cross-member as claimed in one of claims 1 to 9, **characterised in that** the base body (18) has an essentially C-shaped or U-shaped cross-section, the legs (20, 21) of which are directed downwards and forwards at an angle.

11. Cross-member as claimed in claim 10, **characterised in that** the legs (20, 21) are bent outwards at an angle and are wider in the region of fixing points.

12. Cross-member as claimed in claim 10 or 11, **characterised in that** the legs (20, 21) are provided with stiffening ribs (26, 27, 53) in the region of fixing points on the external face.

## Revendications

1. Poutre transversale de support en construction hybride, en particulier pour l'agencement entre des colonnes A d'un véhicule automobile, présentant un corps de base en forme de coque, rigidifié par utilisation de nervures en matière synthétique rapportées par injection, et dans laquelle est prévu au moins un canal de guidage d'air,
**caractérisée en ce que** le corps de base (18) est élargi au moins sur un côté dans la zone centrale et est conformé en tant que partie (33, 34, 35) d'un boîtier d'une installation de chauffage et/ou de climatisation.

2. Poutre transversale de support selon la revendication 1, **caractérisée en ce que** les canaux de guidage d'air (37) sont creusés dans la poutre transversale de support (10) et débouchent dans la zone élargie.

3. Poutre transversale de support selon la revendication 1 ou 2, **caractérisée en ce que** le matériau synthétique injecté forme un canal d'amenée d'air (37) fabriqué de tous côtés en matière synthétique.

4. Poutre transversale de support selon la revendication 1 ou 2, **caractérisée en ce que** le matériau synthétique ne forme qu'une partie des parois des canaux d'amenée d'air (37'), et **en ce que** la ou les paroi(s) complémentaire(s) est/sont formée(s) au moyen du corps de base (18', 18").

5. Poutre transversale de support selon l'une des revendications 1 à 4, **caractérisée en ce que** le corps de base (18) est rigidifié dans la zone élargie, à l'aide d'au moins un composant inséré.

6. Poutre transversale de support selon l'une des revendications 1 à 5, **caractérisée en ce que**, dans la zone élargie, sont formés, d'un seul tenant sur le corps de base (18), des raccordements (16, 17) pour des buses de sortie d'air.

7. Poutre transversale de support selon l'une des revendications 1 à 6, **caractérisée en ce que** le corps de base (18) est muni d'évidements, dans la zone desquels sont formés d'un seul tenant, à l'aide de la matière synthétique, des tubulures de raccordement (15, 16) tubulaires allant au au moins un canal d'amenée d'air (37).

8. Poutre transversale de support selon l'une des revendications 1 à 7, **caractérisée en ce que**, sur la face extérieure du corps de base (18), sont formés par la même matière des supports et/ou des éléments de fixation (29, 43, 44, 45, 46), pour des composants (13, 14, 31, 47, 48) à disposer dans la zone d'un tableau de bord.

9. Poutre transversale de support selon la revendication 8, **caractérisée en ce que**, dans la zone du supports et/ou des éléments de fixation, sont prévus des éléments de rigidification (26, 27, 28, 41) supplémentaires, pour la poutre transversale de support.

10. Poutre transversale de support selon l'une des revendications 1 à 9, **caractérisée en ce que** le corps de base (18) présente une section transversale sensiblement en forme de C ou en forme de U, dont les branches (20, 21) sont orientées obliquement, vers le bas et vers l'avant.

11. Poutre transversale de support selon la revendication 10, **caractérisée en ce que** les branches (20, 21) sont coudées vers l'extérieur et élargies dans la zone des points de fixation.

12. Poutre transversale de support selon la revendication 10 ou 11, **caractérisée en ce que** les branches (20, 21) sont munies, en face extérieure, de nervures de rigidification (26, 27, 53) dans la zone des points de fixation.
